# EUROPEAN PATENT APPLICATION

(11) **EP 3 719 691 A1**
(43) Date of publication of application: **07.10.2020**
(21) Application number: 19382240.0
(22) Date of filing: 02.04.2019
(51) Int. Cl.: G06K 7/00, G06K 17/00, G06K 7/10

(54) **METHOD, SYSTEM AND DEVICE FOR MONITORING AND LABELLING BIOLOGICAL AND PHARMACEUTICAL PRODUCTS**

(71) Applicant: AT-Biotech Traceability Information Systems, SL, 28009 Madrid (ES)
(72) Inventor: AGEA MERINO, Aida, 28014 Madrid (ES); MENA, Antoni, 43206 Reus (ES)
(74) Representative: Juncosa Miró, Jaime

(57) **Abstract**

A method, a system and a device for monitoring and labelling biological and pharmaceutical products are provided. The method comprises reading an optical tag and a RFID tag attached to a biological or pharmaceutical product via a device including an optical reader with computer vision capabilities and a RFID reader, and recording the information read in the RFID tag or in an external database. A comparison of the information read is performed, determining if the information of both tags coincides, emitting indication signals if the information coincides or not. An algorithm can determine whether all or only part of the information included in the optical tag must be compared with the information included in the RFID tag. Likewise, an algorithm can determine whether additional information included in the optical tag has to be added to the RFID tag and/or if additional information included in said external database should be added to the RFID tag.

## Description

### Technical field

The invention generally relates to management and label systems and methods. In particular, the invention relates to a method, system and device for monitoring and labelling biological and pharmaceutical products.

### Background of the Invention

Biological materials, medicines and pharmaceutical products used in healthcare require to be clearly identified and traceable from their origin (manufacturer or biological donor) until their final destination or use, in order to avoid medical or health hazards due to incompatibility of a patient with certain drugs or a biological specimen from a donor, as well as to be able to trace a product if a problem has been detected or else it has been mislaid.

That usually implies that every element must be controlled univocally, so it is usually enclosed in plastic bags, bottles or other many kinds of containers depending on its physical properties, nature and storage needs. To identify univocally every element, an identification label is usually linked to it.

The industry uses labels that can combine descriptive and detailed text or data mixed with one or more barcodes (or other data matrix) as identifiers and/or descriptors. The barcodes can be read one by one with electronic readers that need to be placed very close to the label.

However, the process of reading said labels is not always reliable and/or efficient in certain situations, such as: when the label is wet or frozen, when the label has deteriorated or when the label has been mislaid, which means that the biological or pharmaceutical product cannot be properly identified until a manual action or corrective measure has been performed.

In order to avoid said issues, the use of Radio-frequency identification (RFID) tags has increased substantially. RFID tags are electronic sensors with an identification number that can store additional information in its internal memory. Furthermore, RFID tags can be read at a variable distance using wireless radio frequency communication networks, which means that reading one or more RFID tags can be done without manual handling, and therefore they are increasingly used to increase productivity in manufacturing and distribution industries.

In general, the RFID tag is placed redundantly with a physical readable data matrix label, such as a barcode, wherein both elements store, at least, part of the same information, so that a product can still be monitored and/or traced in the event of one of the labels being damaged.

There are known some patents and patent application in the field.

For example, US 7158030-B2 discloses a medication tracking and/or medical assistance device and method comprising an RFID tag coder for reading from and/or writing to an RFID tag. A processor and a memory process information read from an RFID tag to provide a message based thereon by a visual and/or an audible message.

US 20060032923-A1 provides a system for dispensing pharmaceuticals or other material dispensed in prepackaged containers. The container includes a symbol such as a barcode to identify the contents of the container. The system uses a label having a first portion having an outer edge and a second portion that extends out from one side and above the top of the first portion. The second portion includes an indicium such as a barcode that is printed on the second portion that describes the desired contents of a container on which the label is intended. The symbol and the indicium are electronically read after the label is affixed to the container to determine if the label is on a container having the identified contents.

US 7114654-B2 discloses an RFID encoder that is used in conjunction with a barcode print. The RFID encoder utilizes information obtained from a data stream from a host computer, from a corresponding barcode label, or other source to program an RFID label. The programmed label can then be applied with an integrated applicator or an external applicator. The RFID encoder can also verify that an RFID tag or label has been properly encoded and has the same content as the corresponding barcode label. The RFID can further verify that the barcode has been properly printed. If both barcode and RFID tag contain the correct data, both types of labels are attached to a package, enabling the package to be read optically and with radio frequency signals.

Accordingly, there is a need for new methods, systems and devices for monitoring and labelling biological and pharmaceutical products.

### Description of the Invention

To that end, present invention proposes according to an aspect a method for monitoring and labelling biological and pharmaceutical products. The method comprises reading an optical tag and a RFID tag attached to a biological or pharmaceutical product via a device, which includes an optical reader (e.g. a camera) with computer vision capabilities (e.g. a computer vision software/program) and a RFID reader. The optical tag and the RFID tag include information about said biological or pharmaceutical product.

The method also records the information read from both tags in the RFID tag or in an external database (or memory); compares the information read from both tags, determining if the information at least partially coincides; and emits a first indication signal if the information coincides or a second indication signal if the information does not coincide.

According to the proposed method, a processor implements an algorithm that determines whether all of the information or only part of the information included in the optical tag must be compared with the information included in the RFID tag.

Alternatively or complementarily, the processor may also implement an algorithm that further determines whether additional information included in the optical tag has to be added to the RFID tag and/or if additional information included in said external database should be added to the RFID tag.

According to the present invention, the information included in the optical tag and the RFID tag may comprise a unique identifier and at least one or more of: patient name, blood type, medical history, product information, dosage, traceability data, prescription, product control data, or a combination thereof, among others.

The optical tag may be a barcode, a data matrix, an image or a pictogram, among others.

In an embodiment, the RFID reader upon reception of a signal including information from the optical tag further modifies, overwrites or includes information from the optical tag with the information already included in the RFID tag.

In another embodiment, the RFID reader upon reception of a signal including information from said external database further modifies, overwrites or includes information from the external database with the information already included in the RFID tag.

In an embodiment, said reading is performed simultaneously during labeling of the biological or pharmaceutical product. Likewise, the reading of the optical tag and of the RFID tag can be simultaneously performed.

The first and second indication signals can be optical and/or acoustic signals. Particularly, the two signals are different, thus it is easier for a user to recognize if the information matches or not.

According to another aspect, present invention also provides a system for monitoring and labelling biological and pharmaceutical products. The proposed system comprises a device that includes an optical reader such as a camera with computer vision capabilities and a RFID reader, and a computing system operatively connected to the device and including a memory and at least one processor.

According to the proposed system, the device is configured to read an optical tag and a RFID tag attached to a biological or pharmaceutical product, wherein the information read from both tags is recorded in the RFID tag or in an external database.

The processor is configured to implement one or more algorithms to determine whether all of the information or only part of the information included in the optical tag must be compared with the information included in the RFID tag, determining if the information at least partially coincides, and emit a first indication signal if the information coincides or a second indication signal if the information does not coincide; and/or determine whether additional information included in the optical tag has to be added to the RFID tag and/or if additional information included in said external database should be added to the RFID tag.

In yet another aspect, present invention also provides a device for monitoring and labelling biological and pharmaceutical products, comprising an optical reader with computer vision capabilities configured to read an optical tag attached to a biological or pharmaceutical product; a RFID reader configured to read a RFID tag attached to said biological or pharmaceutical product, said optical tag and said RFID tag including data about said biological or pharmaceutical product; and a processing unit configured to implement one or more algorithms to determine whether all of the information or only part of the information included in the optical tag must be compared with the information included in the RFID tag and to determine if the information at least partially coincides, emitting a first indication signal if the information coincides or a second indication signal if the information does not coincide; and/or to determine whether additional information included in the optical tag has to be added to the RFID tag and/or if additional information included in said external database should be added to the RFID tag.

In a particular embodiment, the device also has a counter support to hold the biological or pharmaceutical product. Moreover, the device may also have a motion sensor to detect when the biological or pharmaceutical product is placed on said counter support, so the monitoring process can start autonomously and automatically upon said detection is made.

Thus, the present invention discloses a method for automating the monitoring of biological and pharmaceutical products during their transport by means of labelling said products (blood components, muscle tissues, organs, medicines, drugs, etc.) with RFID tags and a multi-barcode or other equivalent readable data matrix label.

Furthermore, the present invention provides a method capable of reading a multi-barcode or data matrix label attached to a product and to record that information read in a RFID tag, and capable of verifying that the information in the multi-barcode or data matrix label is already stored in the RFID tag (to be used as a redundancy checkpoint).

Other features of the invention appear from the following detailed description of the invention.

### Brief description of the Drawings

The foregoing and other advantages and features will be more fully understood from the following detailed description of the invention with reference to the accompanying drawings, to be taken in an illustrative and not limitative, in which:
Fig. 1 is a flow chart illustrating an embodiment of a method for monitoring and labelling biological and pharmaceutical products.
Fig. 2 is a flow chart illustrating another embodiment of a method for monitoring and labelling biological and pharmaceutical products.

### Detailed Description of the Invention

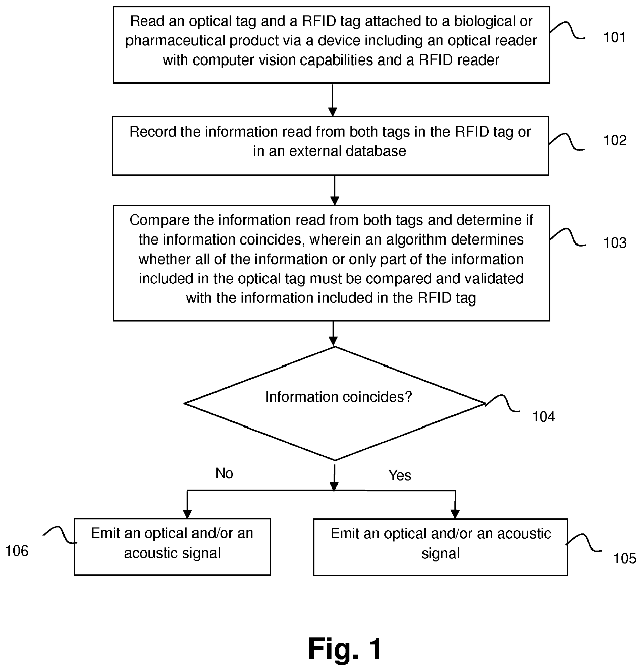

With reference to Fig. 1 therein it is illustrated a first embodiment of the proposed method. According to this embodiment, at step 101, an optical tag (e.g. a barcode, a data matrix, an image, a pictogram, etc.) and a RFID tag attached to a biological or pharmaceutical product such as blood components, muscle tissues, organs, medicines, drugs, etc. are read via a device including an optical reader with computer vision capabilities and a RFID reader. The optical tag and the RFID tag may have associated thereto a unique identifier and data about the biological or pharmaceutical product, for example a patient name, blood type, medical history, product information, dosage, traceability data, prescription, product control data, etc. At step 102, the information read from the tags is recorded either in the RFID tag or in an external database. Then, at step 103, the information read from both tags is compared by a processor. An algorithm or software in this case determines whether all or only part of the information included in the optical tag must be compared with the information included in the RFID tag. The result of the comparison determines if the compared information coincides or not. If the information coincides, a first optical and/or acoustic signal (step 105) is emitted. On the contrary, if the information does not coincide, a second optical and/or acoustic signal (step 106), preferably different to the first indication signal, is emitted. For example, LEDS and/or a code of colors can be used to indicate the coincidence or not coincidence of the compared information. An audible alarm could be equally used.

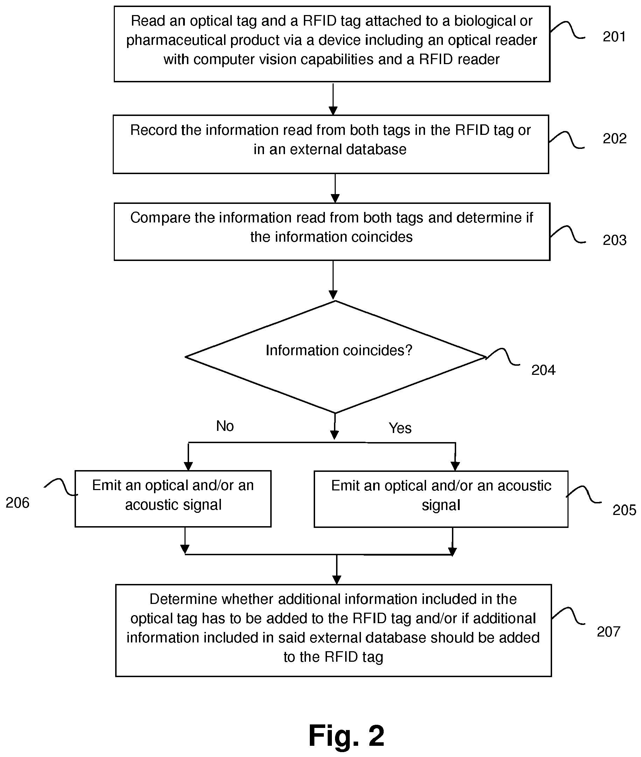

With reference to Fig. 2 therein it is illustrated a second embodiment of the proposed method. In this case, different to the first embodiment, an algorithm or software implemented/executed in the processor further determines, step 207, whether additional information included in the optical tag has to be added to the RFID tag and/or if additional information included in said external database should be added to the RFID tag. In this embodiment, it is possible to perform stages 205/206 and 207 in reverse order. That is, first it can be decided that additional information has to be added to the RFID tag and then the indication showing that the compared information coincides or not be emitted.

It should be noted that both embodiments described above could be complementary to each other. That is, the proposed method can perform the different steps indicated in each of the above described embodiments.

The cited processor can be included in a computing system (e.g. a PC, a cloud server, a smartphone, etc.) remote to the device and connected to the latter, either wirelessly or by cable, or can be included in the device itself. That is, in this latter case the device itself includes a processing unit to execute/perform the different method steps. In either case, a user interface can show the details of the different processes executed.

In any of the described embodiments, the reading of the optical tag and of the RFID tag can be performed simultaneously or one after the other.

The device (not shown in the figures) as indicated above includes an optical reader, for example a camera (digital or analogic having a digital converter), with computer vision capabilities, and a RFID reader. The optical reader is capable of capturing both text and barcodes (or data matrix) from the optical tag. The computer vision capabilities, for example implemented as computer vision software, allow the identification of the pixels in an image taken by the optical reader as barcodes or text and to perform a digital conversion of that data. The RFID reader is able to read and write information on/from the RFID tag. The RFID operates under the ITU RFID standard and range of frequencies.

Particularly, the device also includes a counter support (e.g. a flat surface) to hold the labelled biological or pharmaceutical product. The device can also has an arm to hold the optical reader at a distance from the counter support, in a perpendicular position from the surface of the counter from which the whole surface (or a part of it) can be captured. Optionally, the counter support may have a line of LED lights to show the extension of the surface that is inside the optical reader focus.

The device may also include a motion sensor to detect when the product has been placed in the counter support, so the different cited processes start autonomously and automatically. The communication between the RFID reader and motion sensor is preferably wireless.

The device includes also a power supply unit or batteries for power feeding thereof and may also include other networking components such as cables, software, wireless router, etc. that allow the device to communicate with the remote computing system, sending and receiving information or a sequence of commands.

The cited user interface, which can be included in the remote computing system or in the device itself, provides a configuration panel allowing a user to apply the following restrictions:
i. *Selection of information:* the user can decide to write or validate part of the information in the optical tag (i.e. just one barcode out of several, the information placed in the upper corner of the optical tag, etc.).
ii. *Writing:* the user can transform and code some information in the optical tag or simply add new information in the memory of the RFID tag (i.e. if the word "infected" is written with words on the optical tag, a bit in a certain position of the memory of the RFID tag is set to "1").
iii. *Field Selection (in the RFID tag):* the user can decide if the operation (validation or writing) is to be applied on the total extension of the memory or to some positions. In the case of writing, the new information can optionally overwrite previous existing information stored in the selected part of the memory or the memory can be totally erased before writing.

The above-described embodiments of the present invention are merely meant to be illustrative and not limiting. It will thus be obvious to those skilled in the art that various changes and modifications may be made without departing from this invention in its broader aspects. Therefore, the following claims include all such changes and modifications as fall within the scope of this invention.

## Claims

1. A method for monitoring and labelling biological and pharmaceutical products, the method comprising:
- reading an optical tag and a RFID tag attached to a biological or pharmaceutical product via a device including an optical reader with computer vision capabilities and a RFID reader, said optical tag and said RFID tag including information about said biological or pharmaceutical product; and
- recording the information read from both tags in the RFID tag or in an external database;
- comparing, by a processor, the information read from both tags and determining if the compared information at least partially coincides; and
- emitting a first indication signal if the information coincides or a second indication signal if the information does not coincide;
**characterized in that**:
- in said comparison step, said processor determines whether all of the information or only part of the information included in the optical tag must be compared with the information included in the RFID tag; and/or
- the method further comprises determining, by the processor, whether additional information included in the optical tag has to be added to the RFID tag and/or if additional information included in said external database should be added to the RFID tag.

2. The method of claim 1, wherein the information included in the optical tag and the RFID tag comprises a unique identifier and at least one or more of: patient name, blood type, medical history, product information, dosage, traceability data, prescription, product control data, or a combination thereof.

3. The method of claim 1, wherein the RFID reader upon reception of a signal including information from the optical tag further modifies, overwrites or includes information from the optical tag with the information already included in the RFID tag.

4. The method of claim 1, wherein the RFID reader upon reception of a signal including information from said external database further modifies, overwrites or includes information from the external database with the information already included in the RFID tag.

5. The method of the previous claims, wherein it is implemented simultaneously during labeling of the biological or pharmaceutical product.

6. The method of the previous claims, wherein the optical tag comprises a barcode, a data matrix or a pictogram.

7. The method of claim 1, wherein the first indication signal is an optical and/or an acoustic signal and the second indication signal is an optical and/or an acoustic signal.

8. The method of claim 1 or 7, wherein the first indication signal and the second indication signal are different.

9. The method of claim 1, wherein the reading of the optical tag and of the RFID tag is performed simultaneously.

10. A system for monitoring and labelling biological and pharmaceutical products, comprising:
- a device including an optical reader with computer vision capabilities and a RFID reader, said device being configured to:
- read an optical tag and a RFID tag attached to a biological or pharmaceutical product, said optical tag and said RFID tag including information about said biological or pharmaceutical product; and
- record the information read from both tags in the RFID tag or in an external database; and
- a computing system operatively connected to the device, said computing system including a memory and at least one processor,
wherein said processor being configured to:
- determine whether all of the information or only part of the information included in the optical tag must be compared with the information included in the RFID tag, determine if the information at least partially coincides, and emit a first indication signal if the information coincides or a second indication signal if the information does not coincide; and/or
- determine whether additional information included in the optical tag has to be added to the RFID tag and/or if additional information included in said external database should be added to the RFID tag.

11. The system of claim 10, wherein the device further comprises a counter support configured to hold the biological or pharmaceutical product and a motion sensor configured to detect when the biological or pharmaceutical product is placed on said counter support.

12. The system of claim 10, wherein the first indication signal is an optical and/or an acoustic signal and the second indication signal is an optical and/or an acoustic signal.

13. A device for monitoring and labelling biological and pharmaceutical products, comprising:
- an optical reader with computer vision capabilities configured to read an optical tag attached to a biological or pharmaceutical product;
- a RFID reader configured to read a RFID tag attached to said biological or pharmaceutical product,
said optical tag and said RFID tag including information about said biological or pharmaceutical product, and
the device being configured to record the information read from both tags in the RFID tag or in an external database; and
- a processing unit configured to:
- determine whether all of the information or only part of the information included in the optical tag must be compared with the information included in the RFID tag, determine if the information at least partially coincides, and emit a first indication signal if the information coincides or a second indication signal if the information does not coincide; and/or
- determine whether additional information included in the optical tag has to be added to the RFID tag and/or if additional information included in said external database should be added to the RFID tag.

14. The device of claim 13, further comprising a counter support configured to hold the biological or pharmaceutical product and a motion sensor configured to detect when the biological or pharmaceutical product is placed on said counter support.

15. The system of claim 13 or 14, wherein the first indication signal is an optical and/or an acoustic signal and the second indication signal is an optical and/or an acoustic signal.
